# EUROPEAN PATENT APPLICATION

(11) **EP 2 090 390 A1**
(43) Date of publication of application: **19.08.2009**
(21) Application number: 08738800.5
(22) Date of filing: 25.03.2008
(51) Int. Cl.: B23B 51/00, B23B 51/06

(54) **DEEP HOLE CUTTING APPARATUS**

(30) Priority: 02.04.2007 JP 2007096629
(71) Applicant: UNITAC, Incorporated, Amagasaki-shi, Hyogo 661-0033 (JP)
(72) Inventor: NOMURA, Takuji, Amagasaki-shi Hyogo 661-0033 (JP); SAKAI, Makoto, Amagasaki-shi Hyogo 661-0033 (JP)
(74) Representative: Vossius & Partner
(86) International application number: PCT/JP2008/055505
(87) International publication number: WO 2008/123219

(57) **Abstract**

Provided is a deep hole cutting apparatus having a chip-replaceable guide pad on a cutting head section. With the deep hole cutting apparatus, finish qualities of a cut hole to be formed can be improved and the service life of the guide pad is lengthened. A guide pad (3A) which is slidably brought into contact with the inner circumference of a cutting hole (H) is removably attached with an attaching screw (17b) toapadattaching recessed section (18) which is formed on the outer circumference of a cutting head section (11). The top portion (P1) of the guide pad (3A) protrudes outward in the diameter direction from a cutting circumference (S) of a cutting blade (outer circumference side cutting blade (2A)).

## Description

### [Field of the Invention]

This invention relates to a cutting apparatus used for deep-hole drilling work, and in particular, a deep hole cutting apparatus attached with a tip-replaceable guide pad on an outer periphery of a cutting head portion.

### [Background Art]

A guide pad provided on an outer periphery of a cutting head portion in a deep hole cutting apparatus, in general, slidingly contacts with an inner circumference of a cutting hole during drilling, rendering an inner circumferential surface of the cutting hole receiving a cutting reaction force by a cutting blade. By a so-called burnishing action of keeping a physical relationship between the slidingly contacted area and the cutting blade constant all the time, the cutting head portion is maintained in a rotational state on a constant axis line without runout, thereby enhancing cutting accuracy. The guide pad also exhibits an action of crushing and smoothing unevenness on the inner circumference of the hole involved in cutting. A guide pad of this kind is sometimes integrally formed with the cutting head portion. In most cases, however, the guide pad is configured such that a tip made of a hard material such as cemented carbide, cermet and the like is brazed on or a similar tip is screwed to a pad mounting depression provided on the outer periphery of a cutting head portion made of steel. In particular, the latter screw type guide pad has an advantage of being detachably replaceable with a new one according to abrasion limits and damage. The guide pad is generally applied to a cutting head portion whose cutting blade is also a detachably replaceable throw-away tip.

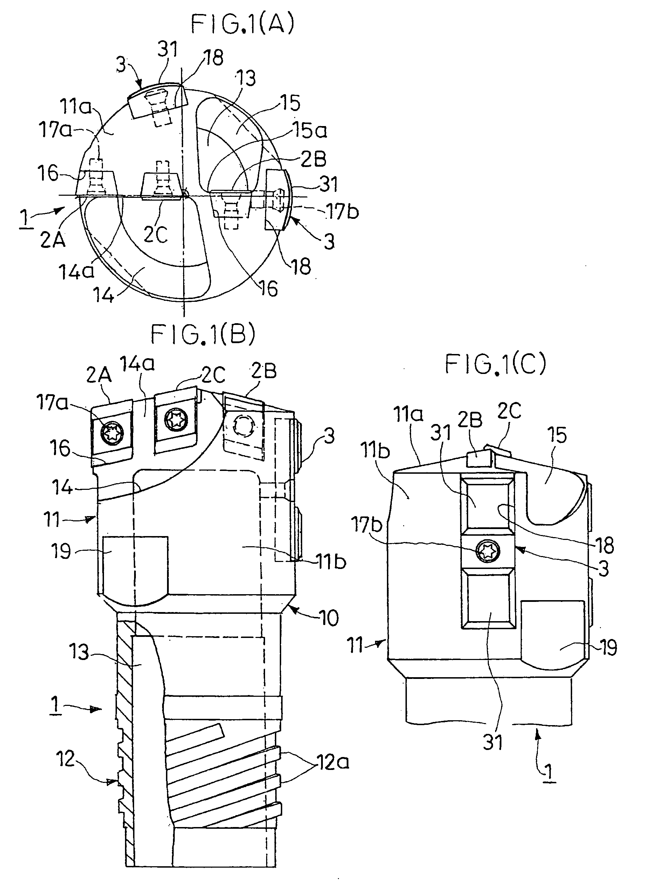

FIGS. 1A to 1C illustrate an example of a drill head in which guide pads and cutting blades are both tip-replaceable. In the drill head 1, a cutting head portion 11 at a front side and a screw shank portion 12 at a rear side constitute a substantially cylindrical head body 10. The screw shank portion 12 is provided with a male thread 12a on an outer periphery thereof. The head body 10 has a hollow interior constituting a chip discharging passage 13 which is open to a rear end. The cutting head portion 11 has a front end surface 11a provided with open chip discharging ports 14, 15 in large and small fan-shapes. The chip discharging ports 14, 15 are communicated with the chip discharging passage 13. There are concavely provided three cutting blade mounting seats 16 along walls 14a, 15a of the chip discharging ports 14, 15. On the cutting blade mounting seats 16, cutting blades 2A to 2C composed of throw-away tips respectively are fixed via screws 17a. Two groove-shaped pad mounting depressions 18 along a head axis direction are concavely provided in respective locations on an outer peripheral surface 11b of the cutting head portion 11. Guide pads 3 in a shape of a substantially thick strip are fixed on the pad mounting depressions 18 via mounting screws 17b, respectively. Reference numeral 19 in the drawing denotes a pair of chucking flat portions formed in the opposed positions in a radial direction on the rear side of the outer peripheral surface 11b of the cutting head portion 11.

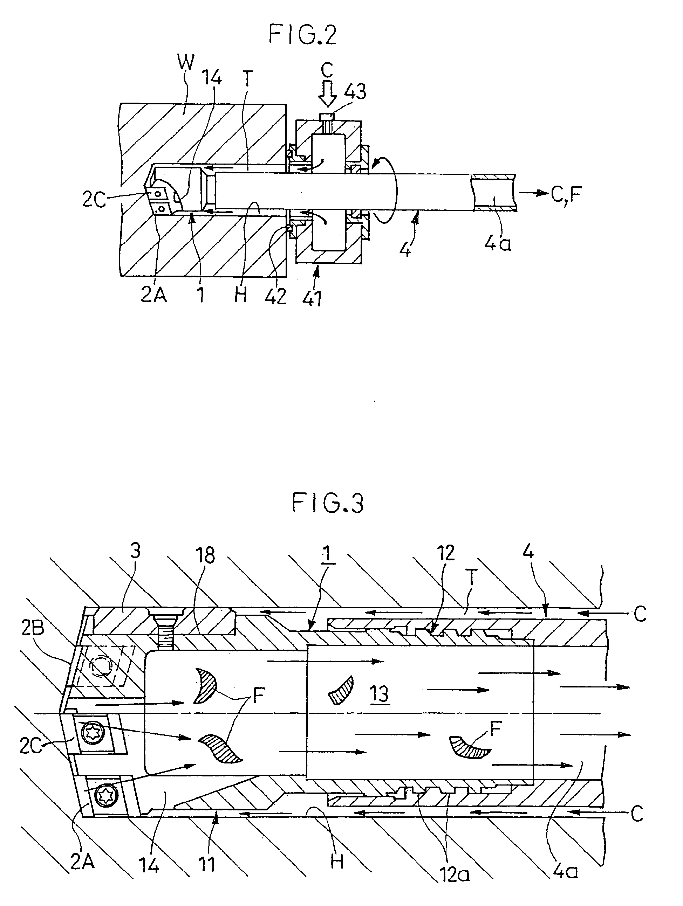

As shown in FIGS. 2 and 3, cutting work is carried out by coupling a circular tubular tool shank (also referred to as a boring bar) 4 of a drill for deep-hole cutting to a spindle of a machine tool and the like and rotatingly driving the tool shank 4 or rotating a work material W side reversely while the drill head 1 is coupled to a distal end of the tool shank 4 by threadedly inserting the screw shank portion 12. A tool rotational direction herein means a relative rotational direction of a tool with respect to a work material W in the work, including the cutting work by rotational driving of the latter work material W side.

In this case, a coolant C is supplied in the manner of an external supply system. While a coolant supply jacket 41 encompassing the tool shank 4 oil-tight as shown in the figure is pressed contacted with the work material W via a seal ring 42, the coolant C is introduced from an introduction port 43 into the coolant supply jacket 41 under high pressure. The coolant C is then supplied to a distal end side of the drill head 1 through a gap T between an outer peripheral surface of the tool shank 4 and an inner circumferential surface of a cutting hole H. The coolant C flows into the chip discharging passage 13 from the chip discharging ports 14, 15 of the drill head 1 together with chips F produced in a cutting region. After that, the coolant C is discharged to the outside, passing a chip discharging passage 4a in the tool shank 4. During the cutting work, cutting reaction force is received on the inner circumferential surface of the cutting hole by the guide pads 3 which slidingly contact with the inner circumference of the cutting hole H. Accordingly, the rotational state of the drill head 1 is maintained stable, and the inner circumference of the hole is smoothed.

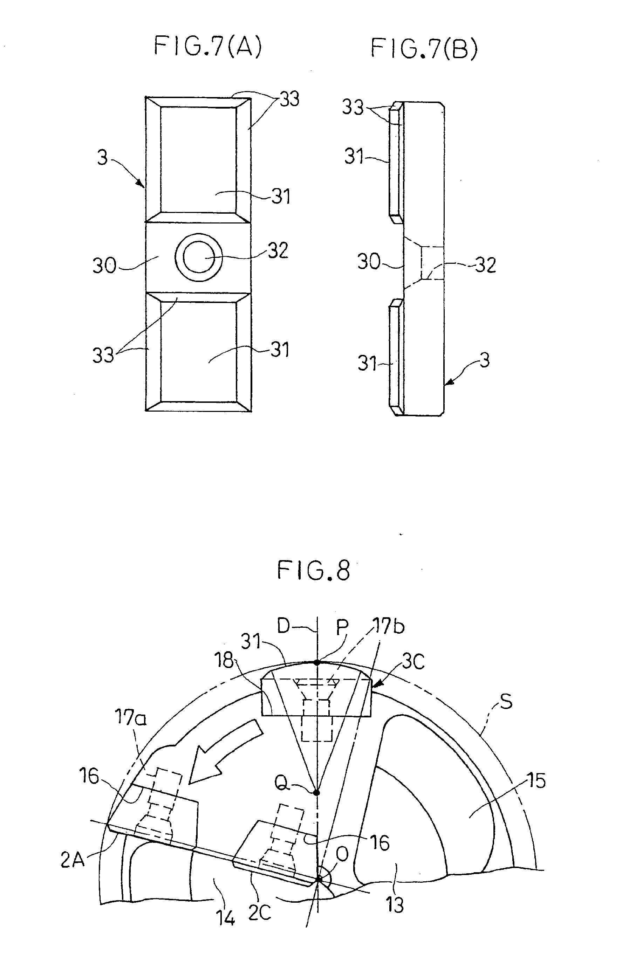

As shown in FIGS. 7A and 7B, each guide pad 3 for this kind of drill head 1 conventionally has an outer surface configured with a flat portion 30 at the center thereof in the longitudinal direction and both sides configured with circular arc-shaped swelling portions 31. A threaded hole 32 is provided in the flat portion 30. A periphery of each swelling portion 31 is generally chamfered 33. As shown in FIG. 8, each swelling portion 31 of the guide pad 3 has a left-right symmetrical cross section in a width direction (a direction along the tool rotational direction), regarding the width direction as the horizontal direction. A surface except for the chamfered 33 periphery has a smaller radius of curvature than a cutting circle S by an outer peripheral side cutting blade 2A. Additionally, the surface constitutes a circular arc-shaped surface whose circular arc center Q is located on a diameter D passing the rotation center O of the drill head 1. The surface has a top P configured at a protruding height coincident with the cutting circle S.

### [Disclosure of the Invention]

### [Problems to be Solved by the Invention]

In deep-hole drilling work by the deep hole cutting apparatus as described above, however, improvement in finished quality of cutting holes to be formed has recently been demanded. Also, as for a tip-replaceable guide pad, extending its service life has been demanded in order to reduce running costs.

The present invention was made in view of the foregoing circumstances, and accordingly an object of the present invention is to provide a deep hole cutting apparatus provided with a tip-replaceable guide pad on a cutting head portion and being capable of improving finished quality of cutting holes to be formed and extending the service life of the guide pad.

### [Means for Solving the Problems]

In order to achieve the aforementioned obj ect, a first aspect of the present invention, described with reference symbols in the drawings, includes guide pads 3A, 3B detachably attached via mounting screws 17b to pad mounting depressions 18 formed on an outer periphery of a cutting head portion 11, the guide pads 3A, 3B slidingly contacting with an inner circumference of a cutting hole H, further the guide pads 3A, 3B having respective tops P1, P2 protruding further outward in a radial direction than a cutting circle S by a cutting blade (outer peripheral side cutting blade 2A).

A second aspect of the present invention is configured such that the tops P1, P2 of the guide pads 3A, 3B in the deep hole cutting apparatus of the first aspect are located further forward in the cutting direction than a midpoint in the width of the guide pads 3A, 3B along the cutting direction.

A third aspect of the present invention is configured such that the tops P1, P2 of the guide pads 3A, 3B in the deep hole cutting apparatus of the first aspect are located on circular arc-shaped surfaces whose radius of curvature is smaller than the cutting circle S by the cutting blade (outer peripheral side cutting blade 2A).

A fourth aspect of the present invention is configured such that the tops P1, P2 of the guide pads 3A, 3B in any one of the deep hole cutting apparatuses of the first to third aspects have an outward protruding amount in the radial direction with respect to the cutting circle S by the cutting blade (outer peripheral side cutting blade 2A) in the range of 0.5 to 50 µm.

### [Effects of the Invention]

According to the deep hole cutting apparatus in accordance with the first aspect of the present invention, the top of each guide pad protrudes further outward in the radial direction than the cutting circle by the cutting blade, so that the guide pad slidingly contacts with the inner circumference of the cutting hole while strongly pressing the latter during the cutting work. Accordingly, unevenness produced on the inner circumference of the cutting hole in cutting is reliably crushed to be smoothed, whereby a cutting hole with a smoother inner circumferential surface and of high quality can be formed. In addition, the guide pad is increased in thickness by the protruding amount, so that abrasion resistance life of the guide pad is extended.

Initial abrasion of the guide pad generally tends to be significant at the rear side in the tool rotational direction. According to the second aspect of the present invention, however, the top of the guide pad is located further forward in the tool rotational direction than the midpoint in the width of the guide pad along the tool rotational direction, so that advance of abrasion in the top which protrudes more than the cutting circle is delayed. Accordingly, this results in extending abrasion resistance life.

According to the third aspect of the present invention, since the top of the guide pad is located on a circular arc-shaped surface with a smaller radius of curvature than the cutting circle by the cutting blade, the surface can be easily configured into a dimensional shape which prevents the front edge side of the guide pad in the tool rotational direction from biting into the inner circumference of the cutting hole.

According to the fourth aspect of the present invention, the top of the guide pad protrudes with respect to the cutting circle by the cutting blade in an appropriate range, so that effective burnishing action and smoothing action of the inner circumferential face can be exhibited without incurring any excessive increase in cutting resistance.

### [Brief Description of the Drawings]

FIG. 1 illustrates a drill head provided with tip-replaceable guide pads and cutting blades used in a deep hole cutting apparatus to which the present invention is directed;
FIG. 1A is a plan view, FIG. 1B is a side view of the whole and
FIG. 1C is a side view of a cutting head portion.
FIG. 2 is a longitudinal sectional side view showing deep-hole drilling work by the deep hole cutting apparatus.
FIG. 3 is a longitudinal sectional side view showing the cutting head portion side of the deep hole cutting apparatus in an enlarged manner.
FIG. 4 is an enlarged transverse sectional view showing a guide pad mounting portion of a drill head used in a deep hole cutting apparatus of a first embodiment in accordance with the present invention.
FIG. 5 is an enlarged transverse sectional view showing a guide pad mounting portion of a drill head used in a deep hole cutting apparatus of a second embodiment in accordance with the present invention.
FIG. 6 illustrates a guide pad used in the deep hole cutting apparatuses of the present invention; FIG. 6A is a perspective view of the guide pad used in the first embodiment and FIG. 6B is a perspective view of the guide pad used in the second embodiment.
FIG. 7 illustrates a guide pad used in a conventional deep hole cutting apparatus; FIG. 7A is a front view and FIG. 7B is a side view.
FIG. 8 is a plan view showing a main part of a drill head of the conventional deep hole cutting apparatus.

### [Description of Symbols]

- 1: Drill head
- 11: Cutting head portion
- 11b: Peripheral surface (outer periphery)
- 17b: Mounting screw
- 2A to 2C: Cutting blades
- 3A, 3B: Guide pads
- H: Cutting hole
- P1, P2: Tops
- S: Cutting circle
- y: Tool Rotational direction

### [Best Mode for Carrying Out the Invention]

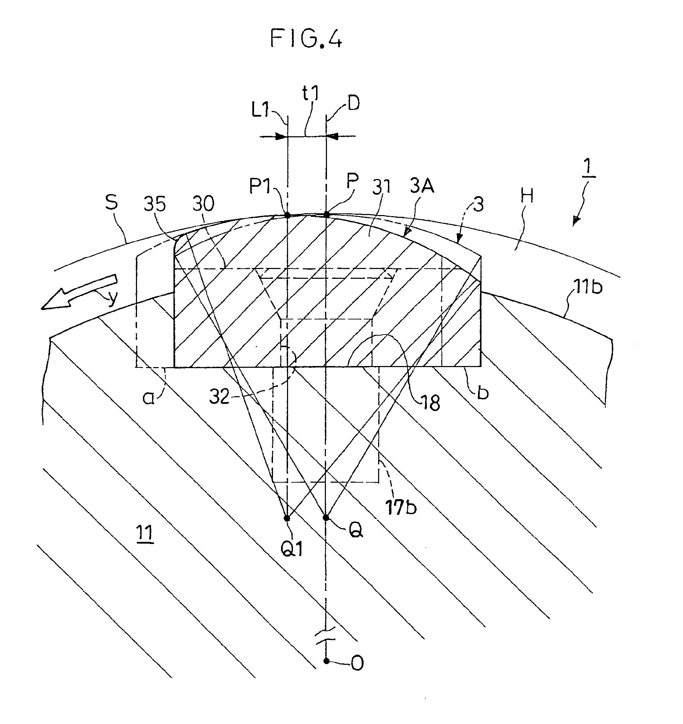

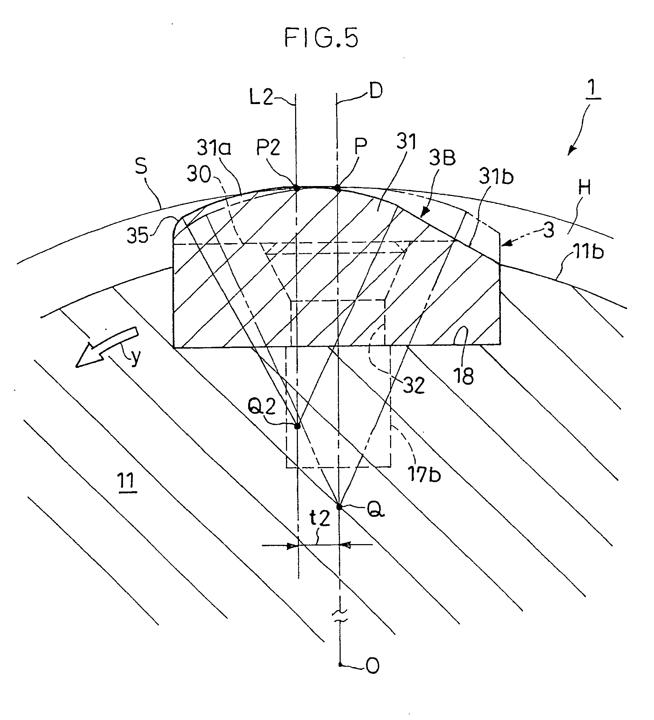

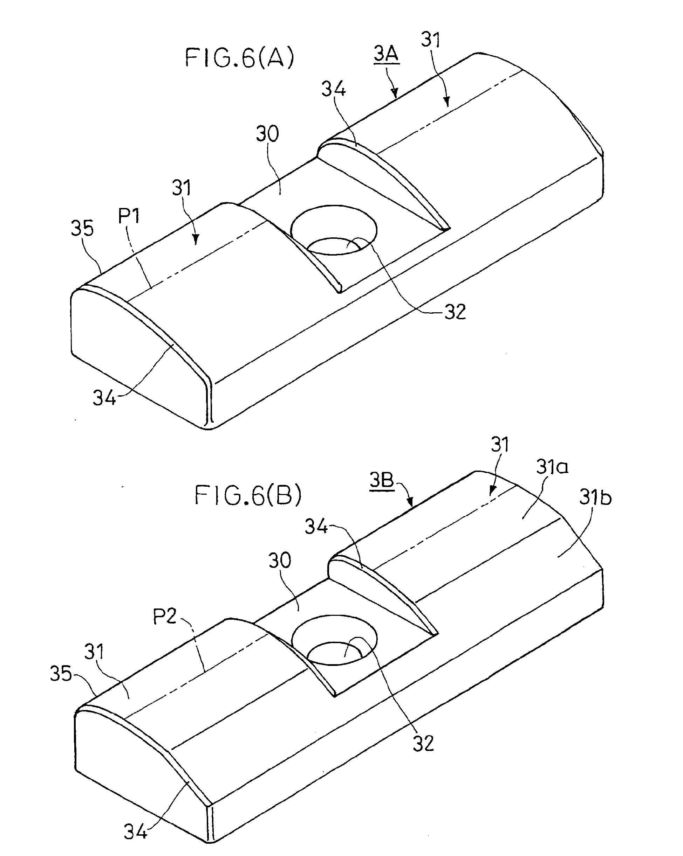

Hereinafter, embodiments of a deep hole cutting apparatus in accordance with the present invention are described in detail with reference to the drawing. FIGS. 4 and 5 illustrate enlarged transverse sectional views of first and second embodiments respectively, each of which showing a guide pad mounting portion of a drill head 1 in the deep hole cutting apparatus. FIGS. 6A and 6B illustrate perspective views of guide pads 3A, 3B employed in the first and second embodiments. The deep hole cutting apparatus of the embodiments has exactly the same fundamental structure with the deep hole cutting apparatus already described with reference to FIGS. 1A to 1C, 2 and 3 except for a form of guide pads 3. Therefore, explanations of components other than the guide pads 3 are omitted.

In the deep hole cutting apparatus of the first embodiment, as shown in FIG. 4, guide pads 3A composed of a hard material such as cemented carbide, cermet and the like are fixed on the pad mounting depressions 18 provided on the outer peripheral surface of the cutting head portion 11 of the drill head 1, via the screws 17b, respectively. The guide pads 3A assume a substantially thick strip shape as a whole, as shown in FIG. 6A. Each guide pad 3A has an outer surface configured with a flat portion 30 at the center thereof in the longitudinal direction and both sides configured with circular arc-shaped swelling portions 31. A threaded hole 32 is provided in the flat portion 30. Surfaces of the both swelling portions 31 constitute circular arc-shaped surfaces with a smaller radius of curvature than the cutting circle S by the outer peripheral side cutting blade 2A (see FIG. 1). In this respect, the guide pads 3A are the same as the guide pads 3 (see FIG. 8) used in the aforementioned conventional deep hole cutting apparatus.

In the guide pad 3A, as shown in FIG. 4, the circular arc-shaped surface of the swelling portion 31 has the same radius of curvature as the circular arc-shaped surface of the aforementioned conventional guide pad 3 shown by the phantom line in FIG. 4. However, the guide pad 3A has a circular arc center Q1 located in a position where the circular arc center Q of the conventional guide pad 3 is displaced forward in the tool rotational direction by t1 in the head tangential direction. The guide pad 3A has a left-right asymmetrical cross section in a width direction (a direction along the tool rotational direction shown by an arrow y), regarding the width direction as the horizontal direction. In brief, the circular arc-shaped surface of the guide pad 3A is displaced by t1 toward the head tangential direction from the circular arc-shaped surface of the guide pad 3. The guide pad 3A has such a shape that a front side in the displacement direction protruding from the pad mounting depression 18 (phantom line a) is removed and a rear side in the displacement direction is added with a circular arc elongated portion b.

Thus, a top P1 of the swelling portion 31 of the guide pad 3A is located on a parallel line L1 at t1 apart from the diameter D passing the rotation center O of the drill head 1. The top P1 projects slightly further outward than the cutting circle S by the outer peripheral side cutting blade 2A. Each swelling portion 31 has both edges in the longitudinal direction which are chamfered 34 and a front edge in the tool rotational direction which is provided with a rounded 35.

The drill head 1 in the first embodiment is provided for required deep-hole drilling work as the screw shank portion 12 is threadedly inserted and coupled to the distal end of the tool shank 4 of the drill for deep-hole cutting (see FIGS. 2 and 3), as mentioned above. Each guide pad 3A slidingly contacts with the inner circumference of the cutting hole H during the deep-hole drilling work, whereby cutting reaction force is received on the inner circumferential surface of the cutting hole H via the guide pad 3A. By the burnishing action, the rotational state of the drill head 1 is maintained stable, and satisfactory working accuracy can be obtained. Additionally, unevenness produced on the inner circumference of the hole in cutting is smoothed. Since the top P1 of the guide pad 3A protrudes further outward than the cutting circle S and slidingly contacts with the inner circumference of the cutting hole H while strongly pressing the latter, unevenness on the inner circumference of the cutting hole H is more strongly and reliably crushed to be smoothed. Accordingly, the cutting hole H superior in smoothness of the inner circumferential surface and of high quality can be formed.

In general, initial abrasion in a guide pad tends to be significant at a rear side in a tool rotational direction. However, the top P1 of the guide pad 3A is located further forward in the tool rotational direction than the midpoint in the width thereof, so that advance of abrasion in the top P1 which protrudes further than the cutting circle S is delayed. Accordingly, abrasion resistance life as a guide pad can be extended, which contributes to a reduction in running costs. Additionally, the guide pad 3A has such a shape that the circular arc center of the surface of the swelling portion 31 which slidingly contacts with the inner circumference of the cutting hole H is merely shifted as compared with the guide pad 3 (see FIG. 7) in the conventional deep hole cutting apparatus. As a result, the guide pad 3A can be attached to the cutting head portion in the conventional deep hole cutting apparatus by using its pad mounting depression 18 without any problem.

In a deep hole cutting apparatus of a second embodiment, guide pads 3B made of a hard material of the same sort as the above are fixed on pad mounting depressions 18 which are provided on the outer peripheral surface of the cutting head portion 11 of the drill head 1, respectively, via mounting screws 17b, as shown in FIG. 5. Each guide pad 3B is formed into a substantially thick strip shape as a whole, as shown in FIG. 6B. Each guide pad 3B has an outer surface configured with a flat portion 30 at the center in the longitudinal direction thereof, the flat portion 30 provided with a threaded hole 32, and both sides configured with circular arc-shaped swelling portions 31. A surface of each swelling portion 31 is composed of a circular arc-shaped surface 31a at the front side in the tool rotational direction and an inclined plane 31b at the rear side in the tool rotational direction. Additionally, each swelling portion 31 is provided with chamfering 34 on both edges in the longitudinal direction and a rounded 35 on the front edge in the tool rotational direction.

The guide pad 3B has a left-right asymmetrical cross section in the width direction in the same manner as the guide pad 3A in the foregoing first embodiment. However, the circular arc-shaped surface 31a of the swelling portion 31 has a smaller radius of curvature than the circular arc-shaped surface of the aforementioned conventional guide pad 3 shown by the phantom line in FIG. 5. The circular arc-shaped surface 31a has a circular arc center Q2 located on a parallel line L2 which is spaced apart by t2 toward the front side in the tool rotational direction from the diameter D passing the rotation center O of the drill head 1. The inclined plane 31b forms an inclined surface from the rear edge in the tool rotational direction of the circular arc-shaped surface 31a to an open edge of the pad mounting depression 18. A top P2 of the swelling portion 31 in the guide pad 3B is located on the line L2 and protrudes slightly further outward than the cutting circle S by the outer peripheral side cutting blade 2A.

In deep-hole drilling work by the drill head 1 provided with the guide pads 3B thus configured, cutting reaction force is received on the inner circumferential surface of the cutting hole H via the guide pads 3B which slidingly contact with the inner circumference of the cutting hole H, in the same manner as the work by the deep hole cutting apparatus of the foregoing first embodiment. By the burnishing action, the rotational state of the drill head 1 can be maintained stable, and satisfactory working accuracy can be obtained. Since the top P2 of each guide pad 3B protrudes slightly further outward than the cutting circle S and slidingly contacts with the inner circumference of the cutting hole H while strongly pressing the latter, unevenness on the inner circumference of the cutting hole H is more strongly and reliably crushed to be smoothed. Consequently, the cutting hole H superior in smoothness of the inner circumferential surface and of high quality can be formed. In the same manner as the guide pad 3A in the first embodiment, the guide pad 3B has the top P2 located further forward in the tool rotational direction than the midpoint in the width thereof. As a result, abrasion resistance life as a guide pad can be extended, which contributes to a reduction in running costs. If the guide pad 3B is designed to have a bottom surface in the same dimensional shape as the guide pad 3 (see FIG. 7) in the conventional deep hole cutting apparatus, the guide pad 3B can replace the guide pad 3 to be used in the conventional deep hole cutting apparatus.

In the deep hole cutting apparatus of the present invention, an outward protruding amount in the radial direction of the top of the guide pad with respect to the cutting circle by the cutting blade is preferably in the range of 0.5 to 50 µm in general, although an optimum range varies in accordance with a tool diameter (cutting hole diameter) . If the amount is too small, effects of smoothing the inner circumference of the hole and extending the service life of the guide pad cannot be obtained sufficiently. If the amount is too large, on the contrary, slide contact resistance is increased, so that cutting efficiency is rendered lower.

As a guide pad used in the deep hole cutting apparatus of the present invention, however, it will suffice if the top of the guide pad protrudes further outward in the radial direction than the cutting circle by the cutting blade and more preferably the top is located further forward in the tool rotational direction than the midpoint in the width of the guide pad along the tool rotational direction. The guide pad is not limited to a substantially thick strip guide pad with a pair of swelling portions that are provided on both sides of the screwed portion and slidingly contact with the inner circumference of the cutting hole as exemplified in the foregoing embodiment, and various forms can be adopted, for example, a guide pad configured such that a strip length is shortened and a single swelling portion having a center provided with a threaded hole is provided. In addition to being composed of a hard material such as cemented carbide, cermet and the like entirely, the guide pad may be composed by using a hard material only for the surface of the swelling portion which is subjected to slide contact with the inner circumference of the cutting hole and an inexpensive material such as common steel for other parts as a base.

Additionally, the surface of the swelling portion in the guide pad may be variously configured with a variety of curved surfaces and combinations of curved surfaces and inclined surfaces. However, it is preferable that a main part including the top be a circular arc-shaped surface in terms of workability. By rendering the radius of curvature smaller than the cutting circle by the cutting blade, the circular arc-shaped surface including the top can be easily configured into a dimensional shape which prevents the front edge side of the guide pad in the tool rotational direction from biting into the inner circumference of the cutting hole.

In the embodiments, the drill head 1 provided with three cutting blades 2A to 2C of outer peripheral side, central and intermediate ones on the cutting head portion 11 thereof is exemplified. However, the present invention is applicable to a case where the number of cutting blades on the cutting head portion is one, two or four or more. The present invention can also be applied to a deep hole cutting apparatus in which a cutting head portion is integrally formed with a tool shank without being independent as a drill head. Furthermore, in a case where the cutting head portion constitutes an independent component as a drill head, a coolant internal supply system (double tube system) may be employed instead of the coolant external supply system (single tube system) as shown in FIG. 2. The coolant internal supply system is configured such that the drill head is connected to a double-tube tool shank, a coolant is delivered from a coolant supply passage between inner and outer cylinders of the tool shank to the outside of the drill head and then the delivered coolant is, together with chips, flown from a coolant discharging port of the drill head to a coolant discharging passage within the inner cylinder of the tool shank.

## Claims

1. A deep hole cutting apparatus comprising:
a cutting head portion with an outer periphery;
a pad mounting depression formed on the outer periphery of the cutting head portion; and
a guide pad detachably attached to the pad mounting depression via a mounting screw, slidingly contacting with an inner circumference of a cutting hole, and having a top protruding further outward in a radial direction than a cutting circle by a cutting blade.

2. The deep hole cutting apparatus according to Claim 1, wherein the top of the guide pad is located further forward in a tool rotational direction than a midpoint in the width of the guide pad along the tool rotational direction.

3. The deep hole cutting apparatus according to Claim 1, wherein the top of the guide pad is located on a circular arc-shaped surface with a smaller radius of curvature than the cutting circle by the cutting blade and also located further forward in a tool rotational direction than a midpoint in the width of the guide pad along the tool rotational direction.

4. The deep hole cutting apparatus according to any one of the preceding claims, wherein the top of the guide pad has an outward protruding amount in the radial direction with respect to the cutting circle by the cutting blade, within the range of 0.5 to 50 µm.
